Europäisches Patentamt

European Patent Office

Office européen des brevets

(11) Publication number: **0 060 186**
**B1**

## (12) EUROPEAN PATENT SPECIFICATION

(45) Date of publication of patent specification: **04.12.85**

(21) Application number: **82400355.2**

(22) Date of filing: **02.03.82**

(51) Int. Cl.⁴: **B 23 Q 5/32**

(54) Adjustable positive feed drill.

(30) Priority: **05.03.81 US 240785**

(43) Date of publication of application:
**15.09.82 Bulletin 82/37**

(45) Publication of the grant of the patent:
**04.12.85 Bulletin 85/49**

(84) Designated Contracting States:
**AT BE CH DE FR GB IT LI LU NL SE**

(56) References cited:
**AT-B- 181 145**
**US-A-3 512 434**
**US-A-3 679 320**
**US-A-4 182 588**

**HERMANN ROLOFF, WILHELM MATEK:**
**"Maschinenelemente", Normung, Berechnung,**
**Gestaltung, 2. Auflage FRIEDRICH VIEWEG &**
**SOHN, Braunschweig**

(73) Proprietor: **TITANOX S.A.**
**17, rue de Prony**
**F-92600 Asnieres (FR)**

(72) Inventor: **Vindez, Pierre G.**
**2107 Voorhees Avenue**
**Redondo Beach, CA. 90278 (US)**

(74) Representative: **Beauchamps, Georges et al**
**Cabinet Z.Weinstein 20, avenue de Friedland**
**F-75008 Paris (FR)**

## Description

This invention relates to positive feed power drills and more particularly to a power drill with a spindle drive gear train and a spindle feed gear train arranged for easily modifying the feed rate relative to the turning rate of the spindle.

Positive feed power drills e.g. US—A—3 512 434 have a motor for turning a spindle through a drive gear train. A drill bit is attached to the spindle by an adapter. For advancing the spindle as the bit drills through a work piece, the spindle is threaded into a feed gear that turns at a predetermined rate faster than the turning rate of the drill bit. The feed gear is driven by a gear train from the same motor as the drive gear train. The gear ratio of the drive gear train is selected to be slightly greater than the gear ratio of the feed gear train so the feed gear will turn a fraction of an rpm faster than the drive gear. In that way the drill bit is advanced a predetermined amount for each turn of the drill bit. Once the spindle has been advanced sufficiently, a mechanism is actuated to disengage the feed gear train from the motor and lock it in place so that, as the motor continues to turn the spindle drive gear in the same direction, the spindle threads turn inside the locked feed gear to rapidly retract the spindle. Also, feed power drills having a conventional selectable feed gear ratio, as defined in the preamble of claim 1, are known from document US—A—3 679 320.

The present invention is embodied in a positive drive power drill having a threaded spindle passing through an internally threaded feed gear, a drive gear slidably locked onto the spindle, a drive gear train extending from a drive motor to the spindle drive gear to turn the spindle at a rate set by the motor through this train of idlers, and a spindle feed gear train extending from the motor to the spindle feed gear. The gear trains include a spindle drive coupling gear and a spindle feed coupling gear releasably locked to the spindle drive coupling gear for turning the spindle feed gear as the spindle drive gear is turned. The gear ratios for the two trains are selected to drive the spindle feed gear at a faster rate than the spindle drive gear. In accordance with the invention, the feed and drive coupling gears are mounted on a common shaft in the main housing of the drill with a removable cap on the housing over the shaft at one end thereof for removing at least the coupling gear nearest the cap and replacing it with a gear having a different number of teeth, thereby to change the differential between the drive gear train ratio and the feed gear train ratio. In practice, the coupling gear nearest the cap is the one replaced in order to modify the feed gear train ratio relative to a predetermined drive gear train ratio, but either or both may be changed by simply removing the coupling gear shaft from the housing, replacing one or two coupling gears with gears having the same diameter, but a different number of teeth, and reinserting the shaft in the housing with both coupling gears engaging adjacent gears in their respective gear trains, without changing any of the adjacent gears.

Because the gear that is changed must have the same outside diameter as the gear it replaces, but a different number of teeth, meshing of the teeth with adjacent gears is assured by changing the profile of each of the teeth in the replacement gear to reduce the tooth width for an increase in the number of teeth, and increase the tooth width for a decrease in the number of teeth. In that manner, the number of teeth in a replacement gear may be increased or decreased without changing the adjacent gears.

The novel features that are considered characteristic of this invention are set forth with particularity in the appended claims. The invention will best be understood from the following description when read in connection with the accompanying drawings.

Figure 1 is a side view in elevation of a positive feed drill embodying the present invention.

Figure 2 shows a vertical cross section of the drill shown in Figure 1.

Figure 3 is an exploded isometric view of that portion of the drill shown in Figure 2 which pertains to the present invention.

Figure 4 is an exploded view of some parts shown in Figure 3, but from a different perspective.

Figure 5 is an exploded view of other parts shown in Figure 3 but from a different perspective.

Figure 6 is a vertical section of the parts in Figures 4 and 5 assembled, as shown in Figure 2, but with some parts shown in a second actuated position.

Figure 7 illustrates in a dashed line a preferred manner of altering the profile of gear teeth when decreasing the number of teeth without changing the gear diameter or tooth height.

Figure 8 illustrates in a dashed line a preferred manner of altering the profile of gear teeth when increasing the number of teeth without changing the gear diameter or tooth height.

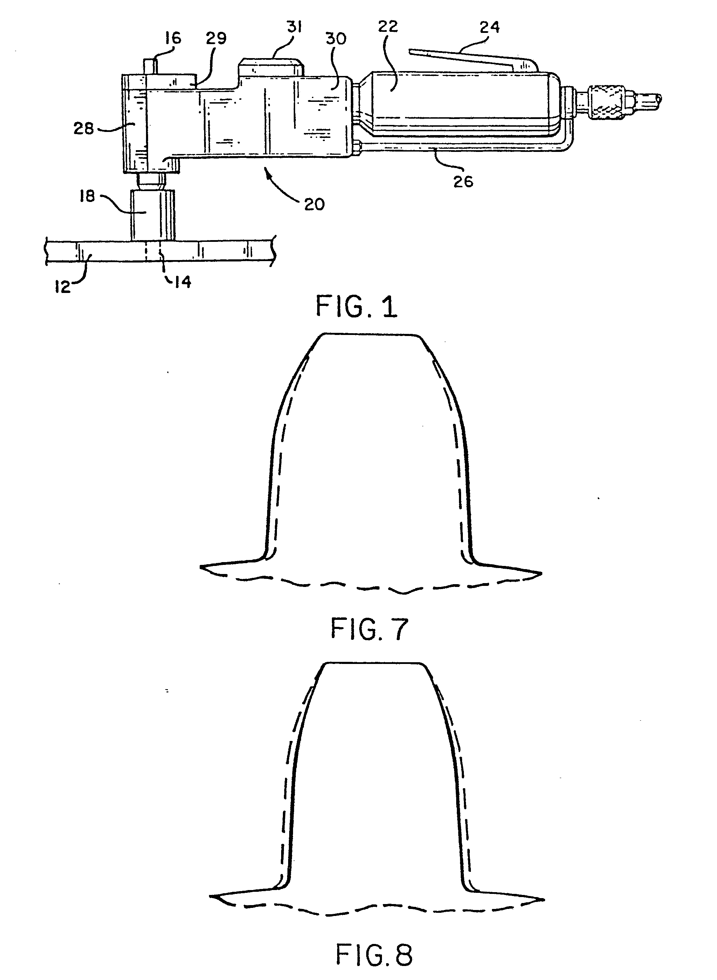

Referring to Figure 1, a positive feed drill is shown on a work piece 12 through which a hole 14 is to be made by a drill bit on the end of a spindle 16 inside a spacer 18. In practice, the spacer is attached to a main housing 20 of the drill, and the entire assembly is either clamped or hand held on the work piece. An air driven motor 22 with a hand operated lever switch 24, drives the spindle through a gear train in the main housing 20.

The main housing 20 encloses a spindle actuator section 28 and a gear train section 30. A cap 29 on the section 28 provides access to the spindle actuator and a cap 31 provides access to coupling gears in the gear train section 30 without requiring total disassembly of the drill for field adjustment of the spindle feed rate. Only access to the gear housing section through the cap 31 is pertinent to the present invention.

A tube 26 couples air under pressure to the main housing where it is utilized primarily to disengage a spindle feed coupling gear to cause the spindle to be rapidly retracted, once means (not shown) determines that the spindle has been advanced a predetermined distance. Because these and other features of the drill are conventional, and are implemented in a manner obvious to one skilled in the prior art, further description will be given herein primarily as to the spindle drive and feed trains within the main housing.

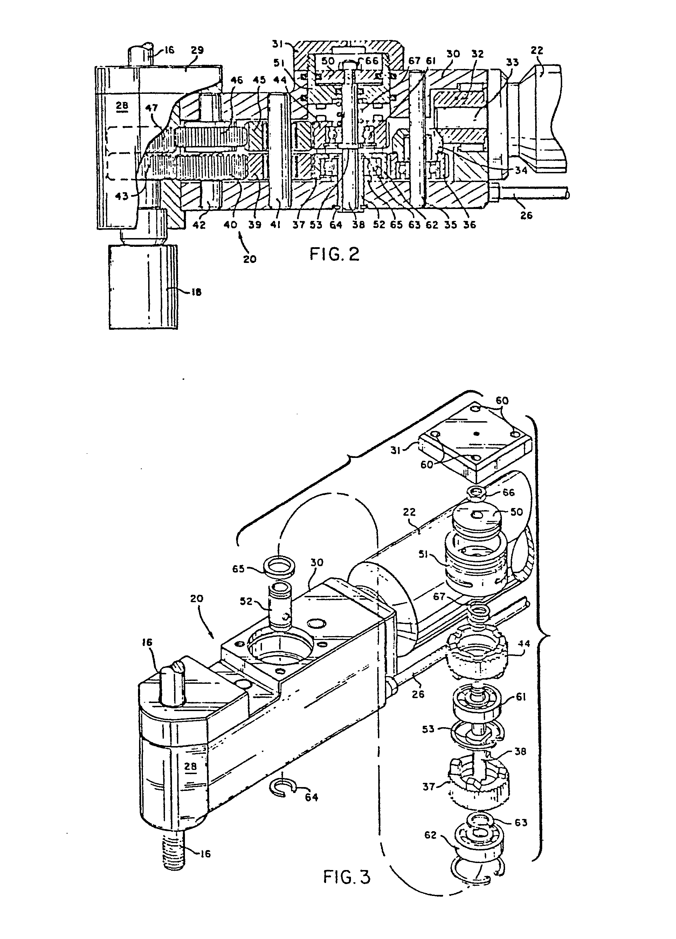

Referring now to Figure 2, which shows a vertical cross section of the main housing attached to the motor 22, the general arrangement for driving and feeding the spindle 16 will first be described. The present invention will then be described in detail.

A beveled gear 32 keyed on the motor shaft 33 meshes with a beveled gear 34 on a vertical shaft 35. Integral with the bevel gear is a gear 36 which meshes with a coupling gear 37 on a vertical shaft 38 for the spindle drive train comprised of idlers 39 and 40 on respective vertical shafts 41 and 42, and a gear 43 slidably keyed to the spindle 16. Mounted on the shaft 38 is a second coupling gear 44 for the spindle feed gear train comprised of idlers 45 and 46 on shafts 41 and 42, and a spindle feed gear 47 threaded on the spindle 16. As the motor turns, the gear 43 turns, thus turning the spindle. The key, or keys, which cause the spindle to rotate with the gear slide in longitudinal slots or keyways (not shown) in the spindle so the spindle may advance in response to the feed gear 47 turning at a fraction of an rpm faster than the drive gear 43.

The feed coupling gear 44 is normally locked onto the drive coupling gear 37 so that it too is driven by the motor through the bevel gears 32 and 34, and the gear 36 locked with the bevel gear 34. Thus the coupling gear 44 turns the spindle feed gear 47 through the idlers 45 and 46 while the drive coupling gear 37 turns the spindle drive gear 43 through the idlers 39 and 40. If the gear ratios of both trains were the same, the spindle feed gear 47 would turn with the spindle drive gear 43, and the spindle 16 would not be advanced toward the work piece. Consequently, the gear ratio is made slightly higher for the feed gear 47 so that, as it turns faster than the spindle drive gear 43, its threads engaging the threaded spindle will feed the spindle toward the work piece at a rate proportional to the difference in speed of rotation of the gears 43 and 47.

All of the gears are suitably mounted on ball bearings and needle bearings for rotation without axial motion, as in the prior art. This is also true about the drive and feed gears 43 and 47.

When the drill bit has advanced into the work piece to the extent desired, this condition is determined (by means not shown) to actuate a valve stem (not shown) in the section 28 of the main housing. This valve stem connects air under pressure from the tube 26 through passages (not shown) in the main housing to space between a piston 50 and a cylinder 51. The upper (open) end of the cylinder is threaded into the cap 31 which is in turn secured to the main housing on top of the gear train section 30. Air pressure thus forces the piston 50 upwardly in the cylinder 51. The space in the cylinder above the piston is vented through a small hole in the cap 31 so that the piston moves up quickly, moving the shaft 38 axially in a sleeve 52.

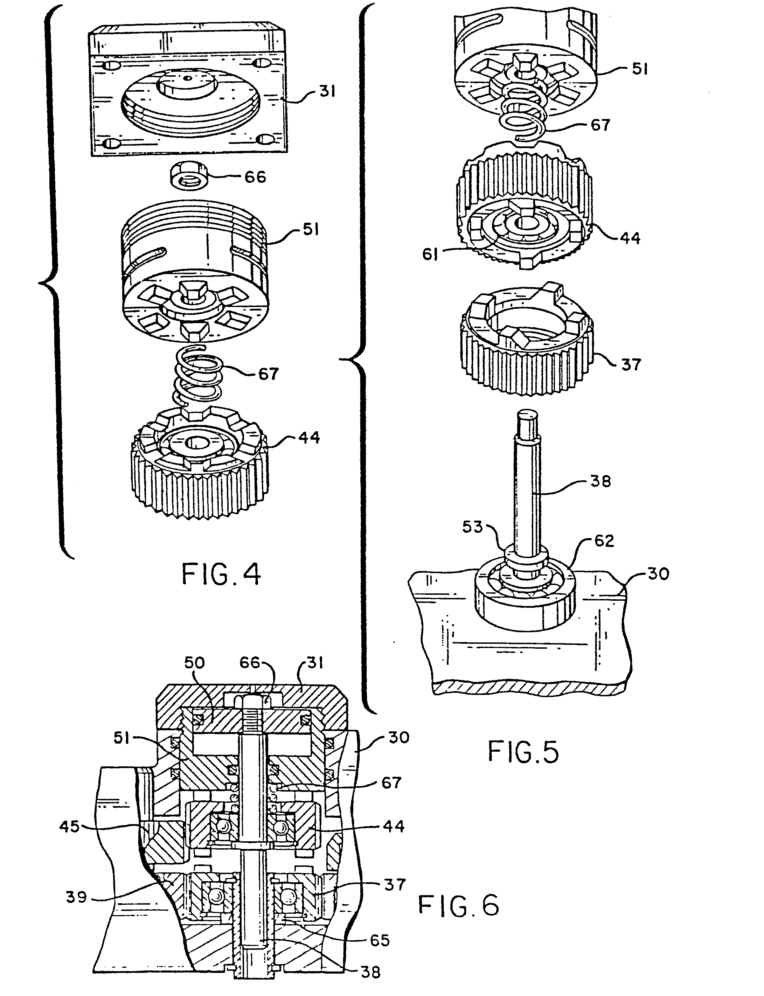

A flange 53 machined as an integral part of the shaft lifts the feed coupling gear 44 (through its ball bearing support 61) until teeth on its upper side butt up against the end wall of the cylinder 51. There teeth on the bottom of the end wall of the cylinder 51 engage teeth on the upper side of the gear 44 to stop rotation of the gear 44, and to disengage teeth on the upper side of the drive coupling gear 37 from opposing teeth on the underside of the coupling gear 44. (These teeth are better shown in the exploded views of Figures 4 and 5). This removes drive from the motor to the feed coupling gear 44, and locks that gear. Note that in raising the feed coupling gear 44, it becomes disengaged only from the drive coupling gear 37; it remains engaged with the idler 45. With the feed coupling gear 44 locked, the gear train to the spindle feed gear 47 is locked against rotation. Consequently, as the spindle drive gear 43 is further rotated, it causes the spindle feed to be reversed due to the threaded spindle turning in the threaded spindle feed gear 47 which is now locked. In that manner, the drill bit is retracted out of the work piece as the spindle continues to turn in the same direction.

Once fully retracted, the valve stem (which admits air under pressure between the piston 50 and the cylinder 51) is reset to its original position, thus allowing the coupling gear 44 to be forced down by a spring 67 to again seat on the coupling gear 37. At the same time, power is removed from the motor operator by releasing the control lever 24. That completes a drilling cycle.

Figures 3 through 6 show the way in which the coupling gears may be removed from the main housing without disturbing the rest of the gear assembly. First, four screws (not shown) are removed from the cap 31. These screws pass through holes 60 in the cap and thread into the housing. Note that the cap 31 screws onto the cylinder 51 so that in lifting the cap 31, the shaft 38 and the feed coupling gear assembly are lifted out of the housing. That assembly consists of the piston 50 and cylinder 51, the coupling gear 44 and its support bearing 61. The drive coupling gear 37, its support bearing 62, and the sleeve 52 remain in the housing. This is because a retainer ring 63 on the sleeve 52 holds the bearing 62 on the inside of the housing, and a retainer ring 64 from the outside of the housing locks the sleeve in place. A spacer 65 for the bearing 62 is placed over the sleeve between the bearing 62 and sleeve 52.

Once the shaft 38 is lifted out of the housing, the cap 31 is unscrewed from the cylinder 51 to gain access to a nut 66 that is removed from the end of the shaft 38, thereby releasing the cylinder 51 from the shaft. Return spring 67 is then removed, followed by the coupling gear 44. A retainer ring 68 locks the bearing 61 in the gear 44 just as a retainer ring 69 locks the bearing 62 in the gear 37.

The coupling gear 37 for the spindle drive gear train may also be removed by simply removing the retainer ring 64 from the bottom of the sleeve on the outside of the housing. The sleeve, gear and bearing will then slide out of the housing.

The purpose for removing the coupling gear 44, and also the coupling gear 37, if desired, is to replace one or both of them with gears having different numbers of teeth to change the gear ratios in one or both gear trains, thereby to alter the spindle feed for each turn of the spindle. If the gear ratios are the same for both gear trains, the gears 43 and 47 on the spindle 16 will turn in unison, and the spindle will not advance into the work piece. Therefore, the gear ratios are chosen to drive the feed gear 47 a small fraction faster. That is basically set by the number of teeth in the spindle drive gear 43 and the spindle feed gear 47. Assuming the number of teeth on the drive gear 43 is forty, and the number of teeth on the feed gear 47 is thirty nine, if both coupling gears 37 and 44 have the same number of teeth, such as forty, the drive gear train ratio will be 40/40, while the feed gear ratio is 40/39. That small difference will turn the feed gear 47 faster than the drive gear 43 by a small fraction. To increase that fractional difference, the feed coupling gear 44 may be changed to one having forty one teeth, or the drive coupling gear 37 to one having thirty nine teeth, or both may be changed.

In that manner, the feed can be increased or decreased for different applications (i.e. for different materials being drilled) by simply changing one or both coupling gears. The task can be carried out quickly in the field by the machine operator without changing adjacent gears. In practice, the drive gear train may be designed for a coupling gear having forty teeth, and a drive gear ratio of 40/40, while the spindle feed train may be designed for a coupling gear having forty one teeth and a feed gear ratio of 41/40 for a differential of 1/40. Then two alternate drive coupling gears may be made available with thirty nine and forth one teeth to select gear ratios of 39/40, 40/40 and 41/40, while two alternate feed coupling gears may be made available to select gear ratios 40/40, 41/40 and 42/40. In that way, the following gear differentials may be selected for six different drive and spindle feed rate combinations, as follows:

| FEED DRIVE | FEED DRIVE |
|---|---|
| 40/40−39/40=1/40 | 41/40−40/40=1/40 |
| 41/40−39/40=2/40 | 42/40−40/40=2/40 |
| 42/40−39/40=3/40 | 42/40−41/40=1/40 |

It should be noted that the replacement gears have the same outer diameter, pitch and teeth height; only the number of teeth is changed. Smooth meshing of the alternate coupling gears with adjacent gears can be readily accomplished by properly shaping the profile of the teeth in the alternate coupling gears since the difference will only be plus or minus one or two, out of a relatively large number, such as forty. In order that gears of the same pitch and the same outside diameter, such as 33.3 mm, with the same tooth height, such as 30.0 mm, be made in a conventional way, a gear with the fewer number of teeth will normally be made with a wider tooth profile, and a gear with the larger number of teeth will normally be made with a smaller tooth profile, so smooth meshing of teeth on an adjacent gear into the spaces between teeth of an alternate gear will not result. To correct that, an alternate gear having a smaller number of teeth is modified to one having a tooth profile that is decreased, as shown by a dashed line in Figure 7, and an alternate gear having a larger number of teeth is made with a tooth profile that is increased, as shown in Figure 8 by a dashed line. The change in tooth profile is in proportion to the increase or decrease in the number of teeth. For example, if the increase is from 40 to 41, the profile is reduced by 1/40, a change of only about 1.25 to 2.5% on each side of a tooth for a change in the number of teeth of 1 to 2 out of 40. The reduction may be tapered from slightly less than is required at the tip to slightly more than is required at the base of each tooth, with a gradual change in the increase, or decrease, as shown in the Figures.

Changing the profile of the teeth in gears having 39, 41 or 42 teeth from a normal profile will allow these alternate gears to mesh with a standard gear having 40 teeth. It is thus possible to change coupling gears without changing adjacent gears. In other words, having all alternate gears made with a tooth profile selected as a function of the number of teeth will assure a better fit between different combinations of gears, all having the same overall diameter and tooth height, but varying in the number of teeth by one or two out of a relatively large number of teeth, such as 40.

**Claims**

1. A positive feed power drill having a spindle drive gear train (36, 37, 39, 40, 43) and a spindle feed gear train (44—47) in a housing (20), and a motor (22) for driving both gear trains through separate coupling gears (37, 44) on a common shaft (38), where the gear ratio of the spindle feed gear train (44—47) relative to the gear ratio of the spindle drive train (36, 37, 39, 40, 43) determines the feed rate of said spindle as a function of the speed of the spindle, characterized in that a removable cap (31) is provided on said housing (20) over one end of said common shaft (38) for access to said shaft (38) and coupling gears (37, 44) for removal of at least one coupling gear (37) or (44), and replacement of the coupling gear (37) or (44) removed with a gear of the same outside diameter and tooth height but a different number of teeth, thereby to change the gear ratio of one of said trains relative to the other to adjust the feed rate.

2. A positive feed power drill as defined in claim 1 wherein said replacement gear has a tooth profile that has been reduced in width from a normal tooth profile for a decrease in the number of teeth and increased in width from a normal tooth profile for an increase in the number of teeth relative to the number of teeth of the coupling gear replaced, but with the same outer diameter and tooth height as the gear replaced, whereby smooth meshing of teeth in the replacement gear with adjacent gears is improved.

3. A positive feed power drill as defined in claim 1 or 2, wherein said spindle feed coupling gear is driven by said spindle drive gear through meshing teeth on the sides thereof, and wherein said common shaft for said coupling gears in said housing is supported between one wall of said housing opposite said cap and a piston in a cylinder secured in the wall of said housing underneath said cap, said shaft being slidably supported in said wall opposite said cap, said shaft having a flange and a bearing resting on said flange to support one of said coupling gears, said piston being adapted to move said shaft axially by fluid pressure to move said one of said coupling gears supported by said bearing resting on said flange on the shaft, thereby to disengage said spindle coupling gear from said spindle drive gear, whereby removing said cap from said housing and removing said cylinder and piston with the shaft and spindle attached, gives access to drive coupling gears for replacement without replacing adjacent gears.

4. A positive feed power drill as defined in claim 3 wherein said piston cylinder is secured to said cap which is in turn secured to said housing, whereby removing said cap removes said cylinder, piston and shaft with said one of said coupling gears supported on a flange on said shaft.

5. A positive feed power drill as defined in claim 3 wherein said cap may be separated from said cylinder, and said piston may be removed from the end of said shaft to remove the cylinder and piston from said shaft, thereby to remove said one of said coupling gears supported on a flange on said shaft from said shaft for replacement without replacing adjacent gears.

6. A positive feed power drill as defined in claim 5 wherein the other of said coupling gears is supported on a bearing mounted on a sleeve around said shaft, said shaft passing through said housing wall, whereby removing said shaft does not disturb said other coupling bearing.

7. A positive feed power drill as defined in claim 6 wherein said other coupling bearing is locked onto said sleeve, and said sleeve is locked into said wall by a retainer ring applied from the outside of said housing wall, whereby to remove said other coupling gear said retainer ring is removed to remove said sleeve from said housing after said shaft has been removed.

## Revendications

1. Une perceuse motorisée à avance positive ayant un train d'engrenage d'entraînement de broche porte-foret (36, 37, 39, 40, 43) et un train d'engrenage d'avance de broche porte-foret (44—47) dans un boîtier (20) et un moteur (22) pour entraîner les deux trains d'engrenages par l'intermédiaire de pignons d'accouplement séparés (37, 44) sur un arbre commun (38), dans laquelle le rapport d'engrenage du train d'engrenage d'avance de broche porte-foret (44—47) relativement au rapport d'engrenage du train d'entraînement de broche porte-foret (36, 37, 39, 40, 43) détermine la vitesse d'avance de ladite broche porte-foret en fonction de la vitesse de la broche porte-foret, caractérisée en ce qu'un capuchon amovible (31) est prévu sur ledit boîtier (20) par-dessus une extrémité dudit arbre commun (38) pour accès audit arbre (38) et aux pignons d'accouplement (37, 44) pour enlèvement d'au moins un pignon d'accouplement (37) ou (44) et remplacement du pignon d'accouplement (37) ou (44) démonté par un pignon de mêmes diamètre extérieur et hauteur de dent mais d'un nombre différent de dents, pour changer ainsi le rapport d'engrenage de l'un desdits trains relativement à l'autre pour régler la vitesse d'avance.

2. Une perceuse motorisée à avance positive, telle que définie dans la revendication 1, dans laquelle le pignon de remplacement précité a un profil de dent qui a été réduit en largeur à partir d'un profil de dent normal pour une diminution du nombre de dents et augmenté en largeur à partir d'un profil normal de dent pour un accroissement du nombre de dents relativement au nombre de dents du pignon d'accouplement remplacé, mais avec les mêmes diamètre extérieur et hauteur de dent que le pignon remplacé, de sorte qu'un engrènement doux de dents dans le pignon de remplacement avec des pignons adjacents est amélioré.

3. Une perceuse motorisée à avance positive telle que définie dans la revendication 1 ou 2, dans laquelle le pignon précité d'accouplement d'avance de broche porte-foret est entraîné par le pignon d'entraînement de broche porte-foret précité par l'intermédiaire de dents engrenantes sur les faces de celui-ci et dans laquelle l'arbre commun précité pour lesdits pignons d'accouplement dans le boîtier précité est supporté entre une paroi dudit boîtier opposée au capuchon précité et un piston dans un cylindre fixé dans la paroi dudit boîtier en dessous dudit capuchon, ledit arbre étant supporté de façon coulissante dans ladite paroi opposée audit capuchon, ledit arbre ayant un collet et un palier reposant sur ledit collet pour supporter l'un desdits pignons d'accouplement, ledit piston étant destiné à déplacer ledit arbre axialement par de la pression de fluide pour déplacer l'un précité desdits pignons d'accouplement supporté par ledit palier reposant sur ledit collet sur ledit arbre, pour débrayer ainsi ledit pignon d'accouplement de broche porte-foret dudit pignon d'entraînement de broche porte-foret, de sorte que l'enlèvement dudit capuchon dudit boîtier et le démontage desdits cylindre et piston avec l'arbre et la broche porte-foret attachés donnent accès aux pignons d'accouplement de commande pour remplacement sans remplacer des pignons adjacents.

4. Une perceuse motorisée à avance positive telle que définie dans la revendication 3, dans laquelle le cylindre à piston précité est fixé au capuchon précité qui est fixé à son tour au boîtier précité, de sorte que l'enlèvement dudit capuchon enlève lesdits cylindre, piston et arbre avec l'un précité des pignons d'accouplement précités supporté sur un collet dudit arbre.

5. Une perceuse motorisée à avance positive telle que définie dans la revendication 3, dans laquelle le capuchon précité peut être séparé du cylindre précité et le piston précité peut être enlevé de l'extrémité de l'arbre précité pour enlever les cylindre et piston dudit arbre, pour enlever ainsi l'un précité des pignons d'accouplement précités, supporté sur un collet dudit arbre, dudit arbre pour remplacement sans remplacer des pignons adjacents.

6. Une perceuse motorisée à avance positive telle que définie dans la revendication 5, dans laquelle l'autre des pignons d'accouplement précités est supporté sur un palier monté sur un manchon autour de l'arbre précité, ledit arbre traversant la paroi de boîtier précitée, de sorte que l'enlèvement dudit arbre ne perturbe pas l'autre palier d'accouplement.

7. Une perceuse motorisée à avance positive telle que définie dans la revendication 6, dans laquelle l'autre palier d'accouplement précité est solidarisé avec le manchon précité et ledit manchon est bloqué dans la paroi précitée par une bague de retenue appliquée de l'extérieur de la paroi de boîtier précitée, de sorte que, pour enlever l'autre pignon d'accouplement précité, ladite bague de retenue est démontée pour enlever ledit manchon dudit boîtier après que l'arbre précité ait été enlevé.

## Patentansprüche

1. Eine Kraftbohrmaschine mit positivem Vorschub, mit einem Spindelantriebsgetriebezug (36, 37, 39, 40, 43) und einem Spindelvorschubgetriebezug (44—47) in einem Gehäuse (20) und einem Motor (22) zum Antreiben beider Getriebezüge über getrennte Kupplungszahnräder (37, 44) an einer gemeinsamen Welle (38), wobei das Übersetzungsverhältnis des Spindelvorschubgetriebezugs (44—47) in Bezug auf das Übersetzungsverhältnis des Spindelantriebsgetriebezugs (36, 37, 39, 40, 43) die Vorschubgeschwindigkeit der besagten Spindel in Abhängigkeit der Spindeldrehzahl bestimmt, dadurch gekennzeichnet, dass ein abnehmbarer Deckel (31) an dem besagten Gehäuse (20) über einem Ende der besagten gemeinsamen Welle (38) vorgesehen ist zwecks Zugang zu der besagten Welle (38) und den Kupplungszahnrädern (37, 44) zum Herausnehmen von wenigstens einem Kupplungszahnrad (37) bzw. (44) und Ersetzen des abgenommenen Kupplungszahnrades (37) oder (44) durch ein Zahnrad mit dem selben Aussendurchmesser und der selben Zahnhöhe aber mit einer unterschiedlichen Zähnezahl, um somit das Übersetzungsverhältnis eines der besagten Getriebzüge im Bezug auf das andere zu ändern, um die Vorschubgeschwindigkeit einzustellen.

2. Eine Kraftbohrmaschine mit positivem Vorschub wie in Anspruch 1 bestimmt, bei welcher das besagte Ersatzzahnrad ein Zahnprofil hat, das ausgehend von einem normalen Zahnprofil, in der Breite verringert worden ist zwecks Verminderung des Zähnezahl und ausgehend von einem normalen Zahnprofil in der Breite vergrössert worden ist zwecks Erhöhung der Zähnezahl in Bezug auf die Zähnezahl des ersetzten Kupplungszahnrades, aber mit demselben Aussendurchmesser und derselben Zahnhöhe wie das ersetzte Zahnrad, wobei das sanfte Kämmen der Zähne des Ersatzzahnrades mit den benachbarten Zahnrädern verbessert wird.

3. Eine Kraftbohrmaschine mit positivem Vorschub wie in Anspruch 1 oder 2 bestimmt, bei welcher das besagte Spindelvorschubkupplungszahnrad durch das besagte Spindelantriebszahnrad über kämmende Zähne an den Seiten desselben angetrieben wird und bei welcher die besagte gemeinsame Welle für die besagten Kupplungszahnräder in dem besagten Gehäuse zwischen einer Wandung des besagten Gehäuses, das dem besagten Deckel und einem Kolben in einem an der Wandung des besagten Gehäuses unterhalb des besagten Deckels befestigten Zylinder gegenüberliegt, wobei die besagte Welle gleitend in der dem besagten Deckel gegenüberliegenden Wandung gehalten wird, wobei die besagte Welle einen Bundflansch und ein auf dem besagten Bundflansch ruhendes Lager aufweist, um eines der besagten Kupplungszahnräder zu tragen, wobei der besagte Kolben dazu bestimmt ist, um die besagte Welle durch den Druck eines fliessfähigen Mediums axial zu verschieben, um das besagte eine der besagten Kupplungszahnräder, welches durch das auf dem besagten Bundflansch an der Welle ruhende Lager getragen wird, zu verschieben, um somit das besagte Spindelkupplungszahnrad aus dem besagten Spindelantriebszahnrad auszurücken, wodurch die Abnahme des besagten Deckels von dem besagten Gehäuse und das Abbauen des besagten Zylinders und Kolbens mit der daran befestigten Welle und Spindel Zugang zu den Antriebskupplungszahnrädern, zwecks Auswechselung ohne benachbarte Zahnräder zu ersetzen, geben.

4. Eine Kraftbohrmaschine mit positivem Vorschub wie in Anspruch 3 bestimmt, bei welcher der besagte Zylinder mit Kolben an dem besagten Deckel angebracht ist, welcher seinerseits an dem besagten Gehäuse befestigt ist, wodurch die Abnahme des besagten Deckels den besagten Zylinder, Kolben und die Welle mit dem besagten einen der besagten Kupplungszahnräder, welches von dem Bundflansch der besagten Welle getragen wird, herausnimmt.

5. Eine Kraftbohrmaschine mit positivem Vorschub wie in Anspruch 3 bestimmt, bei welcher der besagte Deckel von dem besagten Zylinder getrennt werden kann und der besagte Kolben von dem Ende der besagten Welle abgenommen werden kann, um den Zylinder und Kolben von der besagten Welle abzunehmen, um somit das besagte eine der besagten Kupplungszahnräder, welches von dem Bundflansch der besagten Welle getragen wird, von der besagten Welle abzunehmen zwecks Auswechselung ohne benachbarte Zahnräder zu ersetzen.

6. Eine Kraftbohrmaschine mit positivem Vorschub wie in Anspruch 5 bestimmt, bei welcher das andere des besagten Kupplungszahnräder durch ein an einer um der besagten Welle herum angeordneten Hülse angeordnetes Lager gehalten wird, wobei die besagte Welle die besagte Gehäusewandung durchsetzt, wodurch das Herausnehmen der besagten Welle das besagte andere Kupplungslager nicht stört.

7. Eine Kraftbohrmaschine mit positivem Vorschub wie in Anspruch 6 bestimmt, wobei das besagte andere Kupplungslager an der besagten Hülse gesichert ist und die besagte Hülse in der besagten Wandung durch einen von ausserhalb der Gehäusewandung anliegenden Sprengring gesichert wird, wodurch, um das besagte andere Kupplungszahnrad abzunehmen, der besagte Sprengring abgenommen wird, um die besagte Hülse von dem besagten Gehäuse zu lösen, nachdem die besagte Welle herausgenommen worden ist.

FIG. 1

FIG. 7

FIG. 8

FIG. 2

FIG. 3

FIG.4

FIG.5

FIG.6